# EUROPÄISCHE PATENTSCHRIFT

(11) **EP 1 261 509 B1**
(45) Veröffentlichungstag und Bekanntmachung des Hinweises auf die Patenterteilung: **22.09.2004**
(21) Anmeldenummer: 01913534.2
(22) Anmeldetag: 25.01.2001
(51) Int. Cl.: B60R 21/01

(54) **VERFAHREN ZUM ERKENNEN EINER ROLLOVER-SITUATION**
METHOD FOR DETECTING A ROLLOVER SITUATION
PROCEDE POUR RECONNAITRE UNE SITUATION DE TONNEAU

(30) Priorität: 03.03.2000 DE 10010633
(43) Veröffentlichungstag der Anmeldung: 04.12.2002
(73) Patentinhaber: SIEMENS AKTIENGESELLSCHAFT, 80333 München (DE)
(72) Erfinder: FRIMBERGER, Manfred, 84061 Ergoldsbach (DE); WOLF, Florian, 93047 Regensburg (DE)
(86) Internationale Anmeldenummer: PCT/DE2001/000293
(87) Internationale Veröffentlichungsnummer: WO 2001/064482

(56) Entgegenhaltungen:
- WO-A-97/49578
- US-A- 5 081 587
- US-A- 5 262 949
- US-A- 5 407 228

## Beschreibung

Die Erfindung betrifft ein Verfahren zum Erkennen einer Rollover-Situation.

Bisherige Systeme vergleichen die zur Erfassung einer Rolloversituation von den Sensoren gelieferten Sensorsignale nur mit einer festen Schwelle oder verrechnen nur die Sensorsignale von Sensoren gleicher Bauart miteinander. Eine Kombination dieser Sensorsignale und ein Vergleich mit einem Schwellwert wird zur Auslösenentscheidung der Rückhaltemittel herangezogen, was entweder zu einer großen Ansprecheempfindlichkeit und entsprechenden Fehlauslösungen (Misuse) führt oder zu keiner zeitgerechten Auslösenetscheidung führt.

Die WO 99/17963 offenbart eine Schaltung, die ein Auslösesignal für eine Sicherheitseinrichtung erzeugt, wenn das Fahrzeug seitlich auf ein niedriges Hindernis prallt. Die dortige Schaltung besitzt zwei Signalzweige. Im ersten Signalzweig befinden sich zwei Schwellwertentscheider. Der erste Schwellwertentscheider vergleicht die von einem Drehratensensor um die Längsachse des Fahrzeugs gemessene Drehrate oder eine daraus abgeleitete Größe mit einem empirisch ermittelten festen Schwellwert. Der zweite Schwellwertentscheider vergleicht eine von einem Beschleunigungssensor in Richtung der Querachse des Fahrzeugs gemessene Beschleunigung mit einem empirisch ermittelten festen Schwellwert. Wenn in beiden Schwellwertentscheidern gleichzeitig die vorgegebene Schwelle für die Drehrate und die Beschleunigung überschritten worden ist, gibt ein die beiden Signale verknüpfendes Und-Gatter an seinem Ausgang ein Auslösesignal für die Sicherheitseinrichtung ab.

Aufgabe der Erfindung ist es, Rückhaltemittel zum Schutz bei einem Fahrzeugüberschlag zum passenden Zeitpunkt auszulösen.

Die Aufgabe der Erfindung wird durch die Merkmale des unabhängigen Patentanspruchs 1 gelöst.

Die Erfindung besteht darin, Sensorsignale miteinander zu einer Schwellwert zu verknüpfen und eine Auslöseentscheidung herbeizuführen wenn ein Sensorsignal diesen Schwellwert überschreitet.

Dadurch wird ein zeitrichtiges Auslösen von Rückhaltemitteln wie Gurtstraffer oder Kopfairbags beim Fahrzeugüberschlag (Rollover) ermöglicht.

Das Erkennen einer Rollover-Situation wird durch Berechnen geeigneter Terme aus der Drehrate, der lateralen und der vertikaler Beschleunigung des Fahrzeugs durchgeführt. Die Drehrate kann von einem Sensor erfasst werden, der die Bewegung und/oder die Bewegungsänderung um eine der Längsachsen, beispielsweise der Längs- und/oder Querachse des Fahrzeugs, erfasst. Die für das Erkennen der Rollover-Situation geeigneten Terme enthalten die Beschleunigungswerte zumindest einer Richtung und werden mit dem Drehratenterm zu einer dynamischen Schwelle verknüpft. Diese dynamischen Schwelle wird mit einem aus der Drehrate abgeleiteten Kriterium verglichen.

Folgende Vorteile ergeben sich:
- Keine Fehlauslösung im Falle eines Sensorfehlers durch zwei-aus-drei-Entscheidung.
- Erkennen eines Fahrzeugüberschlags vor dem Erreichen der dynamischen Kippschwelle des Fahrzeugs;
- Auswertung der Rotation und Translation des Fahrzeugs;
- Erkennen der für die Fahrzeugüberschlagssituation typischen Konstellation von Rotation und Translation und somit robustes Verhalten bei Missbrauchssituation und Situationen, bei denen das Fahrzeug nahe an den dynamischen Kippwinkel herankommt;
- Abschätzen der Insassenbewegung bei Fahrzeugüberschlägen, denen Fahrsituation mit großer seitlicher Neigung vorausgegangen sind. Wird erkannt, dass sich der Insasse aufgrund einer großen Neigung in der Entfaltungszone eines Airbags (Kopfairbag, Curtain) befindet, so wird dieser auf keinen Fall aktiviert;
- Getrenntes Aktivieren von seitlichen Airbags, abhängig von der Uberschlagsrichtung des Fahrzeugs. Sind weitere Airbags aufgrund von Drehungen > 180° nötig, so werden diese nach Bedarf aktiviert;
- durch Parametrierbarkeit anpassbar für verschiedene Fahrzeugtypen (Van, SUV,...) und verschiedene Rückhalteysteme (Gurtstraffer, Curtain-/Kopf-Airbags, Überrollbügel);
- Fällt ein Beschleunigungssensor aus, so kann mit dem verbleibendem Beschleunigungssensor zumindest ein Teil der möglichen Fahrzeugüberschlagszenarios erkannt werden.

Ein Drehratensignal und ein Beschleunigungssignal wird zu einer Auslöseschwelle verrechnet, was einer Vermischung verschiedener physikalischer Größen entspricht.

Eine dynamische Schwelle wird aus dem Drehratensignal und einem Beschleunigungssignal errechnet.

Im Wesentlichen treten zwei Arten eines Rollover-Unfalls (Überschlag) auf:
Bei einem "Tripped Rollover" rutscht sich das Fahrzeug seitlich in Richtung seiner Querachse (Y-Achse) und überschlägt sich nach Hängenbleiben an einem seitlichen Hindernis, beispielsweise einer Bordsteinkante.

Bei einem "Untripped-Rollover" fährt das Fahrzeug seitlich eine Böschung runter und überschlägt sich bei Überschreiten des seitlichen Kippwinkels des Fahrzeugs um dessen Längsachse (x-Achse).

Bedingt durch die Art des Rollovers (Tripped oder Untripped) wird automatisch zusätzlich zum Drehratensignal das entsprechende Beschleunigungssignal der in Richtung der Z-Achse oder der Y-Achse ausgerichteten Sensoren selektiert und wirksam.

Man benötigt zur Auslöseentscheidung nur zwei Sensorsignale, aber jedoch auch mindesten zwei Sensorsignale, wodurch gleichzeitig eine Safing Funktion gegeben ist. Safing bedeutet, dass eine Fehlauslösung aufgrund von fehlerhaften Bauteilen, z.b. eines Sensors, verhindert wird. Eine Auslösung mit nur einem Sensorsignal ist nicht möglich, wodurch verhindert wird, dass es bei einem Einzelfehler eines Sensors zu einer ungewollten Auslösung kommt.

Die beiden Beschleunigungssensoren Y und Z, die Beschleunignungen in Richtung der Y-Achse bzw. der Z-Achse des Fahrzeugs detektieren, werden nicht zusammen verrechnet und können auch keine Auslöseentscheidung herbeiführen. Das Drehratensignal eines Drehratensensors bildet die Winkelgeschwindigkeit ab, aus dem auch der Fahrzeugneigungswinkel durch Integration gebildet wird. Das Drehratensignal reicht allein nicht zur Auslösung aus, unabhängig von dem Wert dieses Drehratensignals bzw. des Drehwinkels.

Ausführungsbeispiele und Weiterbildungen der Erfindung sind in abhängigen Patentansprüchen angegeben.

Die Erfindung wird anhand der Figuren erläutert. Es zeigen:
- Figur 1: ein vereinfachtes Blockschaltbild zur Auswertung der Sensorsignale eines Rückhaltesystems;
- Figur 2a: eine Fahrzeugsituation, dargestellt durch den zeitlichen Ablauf der Sensorsignale und der daraus abgeleiteten Schwellwerte, die zu einer Nicht-Auslöseentscheidung führen (Non-Deploy);
- Figur 2b: eine weitere Fahrzeugsituation, dargestellt durch den zeitlichen Ablauf der Sensorsignale und der daraus abgeleiteten Schwellwerte, die zu einer Auslöseentscheidung führen (Deploy);
- Figur 3: ein Blockschaltbild eines entsprechenden Safing-Konzepts.

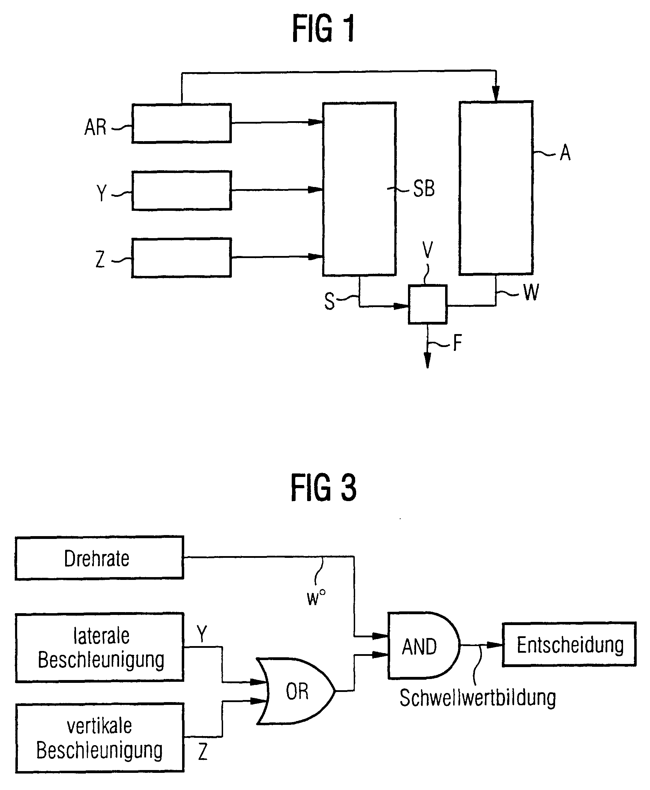

In der Figur 1 sind Sensoren Y, Z zum Erfassen von Fahrzeugbeschleunigungen in die Fahrzeugquerachse (Y-Richtung) und in die vertikale Fahrzeugachse (Z-Richtung) und ein Drehratensensor AR zum Erfassen der Fahrzeugdrehgeschwindigkeit um die Fahrzeuglängsachse (X-Achse) dargestellt. Die Signale der Sensoren Y, Z, AR werden von einem Schwellwertbilder SB ausgewertet, der nach einem vorgegebenen Algorithmus einen dynamischen Rollover-Schwellwert S bildet. Ein Anpasselement A bestimmt aus dem Signal des Drehratensensors AR die Winkelgeschwindigkeit w um die Fahrzeuglängsachse. Ein Vergleicher V, der beispielsweise in einer Airbag-Steuereinheit ECU angeordnet sein kann, sendet einen Feuerbefehl F an ein nachgeordnetes Rückhaltemittel, wenn die Winkelgeschwindigkeit w den Rollover-Schwellwert S überschreitet.

Die in Figur 1 dargestellte Vorrichtung ist beispielsweise Teil eines Insassenrückhaltesystems eines Fahrzeugs.

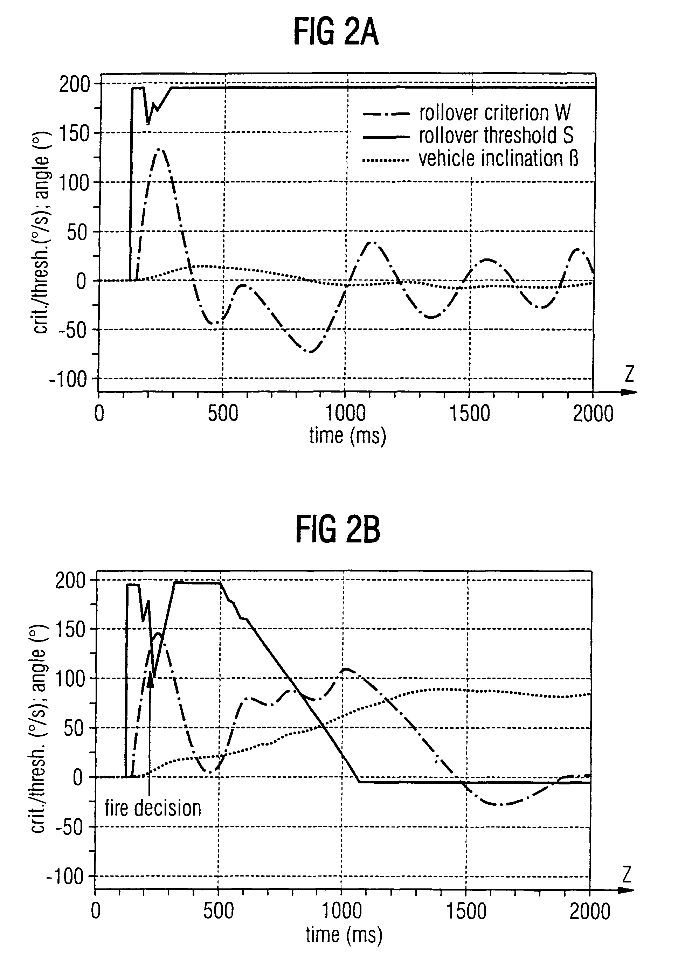

In den Figuren 2a und 2b sind unterschiedliche Fahrzeugsituationen dargestellt:
- Die Fahrzeugneigung β (vehicle inclination) um die Längsachse (x-Achse) des Fahrzeugs in Abhängigkeit von der Zeit t ist durch den gepunkteten Graphen dargestellt. Die Einheit der Fahrzeugneigung ist in Grad (°) angegeben.
- Die Winkelgeschwindigkeit w (rollover criterion) des Fahrzeugs um die Längsachse des Fahrzeugs in Abhangigkeit von der Zeit t ist durch den gestrichelten Graphen dargestellt. Die Einheit der Winkelgeschwindigkeit w ist in Grad pro Sekunde (°/s) angegeben. Die Winkelgeschwindigkeit w stellt das Kriterium zur Erkennung eines Rollovers dar (rollover criterion w).
- Der dynamische Rollover-Schwellwert S (rollover threshold) wird aus den Signalen der Beschleunigungssensoren Y, Z in x- und Z-Richtung und des Drehratensensors AR berechnet und ist durch den durchgezogenen Graphen dargestellt. Stellt. Die Einheit des Rollover-Schwellwertes S ist in Grad pro Sekunde (°/s) umgerechnet.

Das Ausgangssignal des Drehratensensors AR erfasst die Drehbewegungen um die x-Achse des Fahrzeugs und wird vorzugsweise über einen Tiefpass gefiltert. Das am Ausgang des Tiefpasses anliegende Signal stellt die Winkelgeschwindigkeit w dar, die über einen Intagrator integriert wird, um die Fahrzeugneigung β zu erhalten.

Überschreitet das rollover criterion w die dynamische Rollover-Schwelle S (rollover threshold), so wird auf einen Überschlag (Rollover) erkannt und das Rückhaltemittel ausgelöst.

Die Rollover-Schwelle S reduziert sich bei Auftreten von lateralen Beschleunigungen in y-, z-Richtung und/oder Drehbeschleunigungen vor allem um die Längsachse des Fahrzeugs.

In Figur 2a ist eine kritische Fahrzeugsituation abgebildet bei der sich das Fahrzeug beispielsweise durch eine zu eng genommenen Kurve seitlich mit hoher Winkelbeschleunigung (w_max=130°/s) und stark um etwa β=20° neigt (t=0 bis 400 ms,) und sich dann aber wieder nach seitliche Ausgleichbewegungen um die Längsachse fängt (t<400 ms). Der Rollover-Schwellwert S wird während des Zeitraumes 150 bis 300 ms hauptsächlich aufgrund der Terme der lateralen Beschleungigung reduziert. In z-Richtung tritt keine signifikante Beschleunigung auf. Da das rollover criterion w aber den Schwellwert S nicht überschreitet, wird kein Rückhaltesystem ausgelöst (Non-Deploy).

In Figur 2b ist eine Unfallsituation abgebildet, bei der das Fahrzeug seitlich ins Rutschen gerät (t=50ms) , sich seitlich zu neigen beginnt (t=75ms) und dann von einer Fahrbahnunebenheit abrupt gebremst wird (t=100ms), wodurch das Fahrzeug beginnt, sich um die x-Achse zu überschlagen (t>100ms). Das Fahrzeug bleibt in einem Winkel von etwa β=90° liegen (t>1500ms). Der Algorithmus hat frühzeitig (t=100ms) erkannt, dass das Fahrzeug seitlich so stark abgebremst und gleichzeitig geneigt wird, dass dies zum Überschlag führen wird. Die Zündentscheidung wird zu dem Zeitpunkt getroffen, bei dem das rollover criterion die dynamische Rollover-Schwelle S überschreitet.

Durch die starke laterale Beschleunigung in y-Achse reduziert sich die Rollover-Schwelle S kurzfristig auf 100 °/s, wodurch die Winkelgeschwindigkeit w die Rollover-Schwelle S übersteigt. Dadurch wird die Auslöseentscheidung (Deploy) getroffen.

Weiterhin ist ersichtlich, dass ab etwa t=600ms Änderungen der Beschleunigung entlang der z-Achse auftreten, die zu einer kontinuierlichen Reduzierung der Rollover-Schwelle führen (t = 600 ...1000ms). Käme das Fahrzeug nicht aufgrund einer starken Lateralbeschleunigung in Y-Richtung zur seitlichen Lage w=90°, sondern erst aufgrund des Befahrens einer Böschung mit langsamen seitlichen Umkippen, so würde das Rückhaltemittel etwa zum Zeitpunkt t=800ms (Schnittpunkt der Graphen w-S) auslösen.

Somit werden unterschiedlichste Unfallsituationen und "nur" kritische Fahrzeugsituationen klar erkannt und das Rückhaltemittel zum richtigen Zeitpunkt oder nicht ausgelöst.

In Figur 3 ist ein Safing-Konzept dargestellt, bei dem die laterale Beschleunigung in y-Achse und die vertikale Beschleungigung in z-Achse miteinander verodert werden und das Ergebnis der Veroderung mit der Winkelbeschleunigung w des Drehratensensors AR verundet wird. Dadurch wird sichergestellt, dass bei einem defekten Sensor keine Fehlauslösung stattfindet.

## Patentansprüche

1. Verfahren zum Erkennen einer Rollover-Situation, bei dem
- eine translatorische (Y, Z) und eine rotatorische Bewegung (AR) und/oder Bewegungsänderung des Fahrzeugs erfasst wird,
- aus mindestens einer translatorischen (Y bzw. Z) und mindestens einer rotatorischen Bewegung und/oder Bewegungsänderung (AR) eine Rollover-Schwelle (S) ermittelt wird, und
- ein Rückhaltemittel ausgelöst wird wenn eine rotatorische Bewegung und/oder Bewegungsänderung (W) die Rollover-Schwelle (S) überschreitet.

2. Verfahren nach Anspruch 1, **dadurch gekennzeichnet, dass** die Rollover-Schwelle (S) abhängt von der Beschleunigung (Y, Z) des Fahrzeugs quer zu dessen Fahrzeugachse.

3. Verfahren nach einem der vorherigen Ansprüche, **dadurch gekennzeichnet, dass** die Rollover-Schwelle (S) abhängt von der Winkelgeschwindigkeit (AR) des Fahrzeugs um dessen Längsachse.

4. Verfahren nach einem der vorherigen Ansprüche, **dadurch gekennzeichnet, dass** die Rollover-Schwelle (S) abhängt von der Beschleunigung des Fahrzeugs in dessen vertikalen Richtung (z-Richtung).

5. Verfahren nach einem der vorherigen Ansprüche, **dadurch gekennzeichnet, dass** die Rollover-Schwelle (S) dynamisch abhängt von der zeitlichen Dauer der Beschleunigung des Fahrzeugs quer zu dessen Fahrzeugachse und/oder der Winkelgeschwindigkeit (AR) des Fahrzeugs um dessen Längsachse und/oder der Beschleunigung des Fahrzeugs in dessen vertikalen Richtung (z-Richtung).

6. Verfahren nach einem der vorherigen Ansprüche, **dadurch gekennzeichnet, dass**
ein Sensor die Beschleunigung in lateraler Richtung quer (y-Richtung) zur Fahrzeuglängsachse erfasst,
ein Sensor die Beschleunigung in vertikaler Richtung (z-Richtung) erfasst.

7. Verfahren nach einem der vorherigen Ansprüche, **dadurch gekennzeichnet, dass**
das Rückhaltemittel nur dann auslösen kann, wenn mindestens ein Beschleunigungssignal (Y bzw. Z) und mindestens eine rotationische Bewegung (AR) vorliegt.

## Claims

1. Method for detecting a rollover situation in which
- a translatory (Y, Z) and a rotary movement (AR) and/or change of movement of the vehicle is detected,
- a rollover threshold (S) is determined from at least one translatory (Y or Z) and at least one rotary movement and/or change of movement (AR), and
- a restraint means is triggered if a rotary movement and/or change of movement (W) exceeds the rollover threshold (S).

2. Method according to Claim 1, **characterized in that** the rollover threshold (S) depends on the acceleration (Y, Z) of the vehicle perpendicular to its vehicle axis.

3. Method according to one of the preceding claims, **characterized in that** the rollover threshold (S) depends on the angular speed (AR) of the vehicle about its longitudinal axis.

4. Method according to one of the preceding claims, **characterized in that** the rollover threshold (S) depends on the acceleration of the vehicle in its vertical direction (z-direction).

5. Method according to one of the preceding claims, **characterized in that** the rollover threshold (S) depends dynamically on the duration in time of the acceleration of the vehicle perpendicular to its vehicle axis and/or the angular speed (AR) of the vehicle about its longitudinal axis and/or the acceleration of the vehicle in its vertical direction (z-direction).

6. Method according to one of the preceding claims, **characterized in that**
a sensor detects the acceleration in the lateral direction perpendicular (y-direction) to the longitudinal axis of the vehicle,
a sensor detects the acceleration in the vertical direction (z-direction).

7. Method according to one of the preceding claims, **characterized in that**
the restraint means can only trigger when at least one acceleration signal (Y or Z) and at least one rotary movement is present.

## Revendications

1. Procédé permettant de détecter une situation de capotage, dans lequel
- sont saisis un mouvement de translation (y,z) et un mouvement de rotation (AR) du véhicule et/ou un changement desdits mouvements,
- à partir d'au moins un mouvement de translation (y ou z) et d'au moins un mouvement de rotation (AR) et/ou du changement desdits mouvements est déterminé un seuil de capotage (S), et
- un moyen de retenue est déclenché lorsqu'un mouvement de rotation et/ou un changement de mouvement de rotation (w) dépasse le seuil de capotage (S).

2. Procédé selon la revendication 1, **caractérisé en ce que** le seuil de capotage (S) dépend de l'accélération (y,z) du véhicule transversalement à l'axe dudit véhicule.

3. Procédé selon l'une des revendications précédentes, **caractérisé en ce que** le seuil de capotage (S) dépend de la vitesse angulaire (AR) du véhicule toumant sur son axe longitudinal.

4. Procédé selon l'une des revendications précédentes, **caractérisé en ce que** le seuil de capotage (S) dépend de l'accélération du véhicule dans sa direction verticale (direction z).

5. Procédé selon l'une des revendications précédentes, **caractérisé en ce que** le seuil de capotage (S) dépend dynamiquement de la durée de l'accélération du véhicule transversalement à son axe et/ou de la vitesse angulaire (AR) du véhicule toumant sur son axe longitudinal et/ou de l'accélération du véhicule dans sa direction verticale (direction z).

6. Procédé selon l'une des revendications précédentes, **caractérisé en ce qu'**
un capteur saisit l'accélération en direction latérale survenant transversalement (direction y) à l'axe longitudinal du véhicule,
un capteur saisit l'accélération en direction verticale (direction z).

7. Procédé selon l'une des revendications précédentes, **caractérisé en ce que**
le moyen de retenue ne peut être déclenché que s'il existe au moins un signal d'accélération (y ou z) et au moins un mouvement de rotation.
